# DEMANDE DE BREVET EUROPEEN

(11) **EP 2 600 415 A1**
(43) Date de publication de la demande: **05.06.2013**
(21) Numéro de dépôt: 11306607.0
(22) Date de dépôt: 02.12.2011
(51) Int. Cl.: H01L 31/042, H01L 31/048, F24J 2/52

(54) **Installation solaire photovoltaïque**

(71) Demandeur: Marchegay S.A., 85400 Lucon (FR)
(72) Inventeur: Lelaure, Anthony, 85320 Corpe (FR); Chesneau, Stéphane, 85440 Talmont Saint Hilaire (FR)
(74) Mandataire: Descamps, Cécile

(57) **Abrégé**

La présente invention concerne une installation solaire photovoltaïque (1) montée sur au moins une portion de charpente (C) de toiture (T), notamment une toiture (T) comprenant des tuiles ou des ardoises, comprenant :
- au moins un panneau photovoltaïque (2),
- une structure (50), notamment en aluminium, comprenant au moins deux rails (3) s'étendant parallèlement à des chevrons (D) de la charpente (C), selon un axe longitudinal (X), les rails (3) étant configurés pour maintenir au moins partiellement ledit au moins un panneau photovoltaïque (2) sur ladite charpente (C),
**caractérisée en ce qu'**au moins l'un des rails (3) comporte une ouverture (6) configurée pour permettre le passage d'une vis de fixation (7) du rail (3) sur la charpente (C) tout en ménageant un jeu autorisant un léger déplacement du rail (3) relativement à la charpente (C), apte à absorber une dilatation de la structure (50).

## Description

### 1. Domaine de l'invention

L'invention concerne le domaine de la conception, de la fabrication et de la pose sur des charpentes de toitures, de modules ou panneaux photovoltaïques pour la production d'électricité à partir de l'énergie solaire. Plus précisément, l'invention concerne les installations solaires photovoltaïques au sein de surfaces de couverture telles que des toitures, notamment des toitures en tuiles ou en ardoises, par exemple des toitures d'habitation existantes ou à construire, reposant sur des charpentes.

De telles installations solaires photovoltaïques peuvent comprendre une structure formant un maillage de rails et de traverses, par exemple en aluminium, supportant un ou plusieurs panneaux photovoltaïques.

### 2. Solutions de l'art antérieur

Une contrainte des installations solaires photovoltaïques comprenant une structure formant un maillage de rails et de traverses pour maintenir des panneaux photovoltaïques est qu'elles doivent être aptes à supporter la dilatation de la structure.

Pour s'adapter à une éventuelle dilatation de la structure aluminium, il est connu d'ajouter, de part et d'autre des rails, des pièces supplémentaires, couramment appelées « crapauds », reliées aux rails de manière à ménager un jeu entre les pièces supplémentaires et les rails, pour absorber une dilatation éventuelle de la structure.

Un inconvénient de l'usage de ces pièces supplémentaires est qu'il augmente le coût de revient de l'installation solaire photovoltaïque en augmentant le nombre de pièces nécessaires et également le coût de pose de l'installation solaire photovoltaïque en augmentant le temps de montage de celle-ci.

Par ailleurs, lorsque la pose d'une installation solaire photovoltaïque a lieu sur une toiture existante, il y a parfois nécessité de reprendre la charpente si celle-ci est déformée, ce qui impose à l'opérateur d'ajouter du bois sur mesure pour rattraper les déformations, au moment du montage.

La demande de brevet FR 2 956 680 propose de pallier ce problème par la pose éventuelle de cales dont le nombre est fonction de la déformation rencontrée.

Il existe un besoin pour proposer une solution alternative, améliorant le confort de pose pour l'opérateur et éventuellement la précision de la compensation apportée par la ou les cales.

Enfin, le montage d'une installation solaire photovoltaïque sur une toiture impose de faire des mesures *in situ* pour disposer correctement les éléments, notamment les rails, de l'installation solaire photovoltaïque, ce qui tend à augmenter les temps de montage.

La demande de brevet FR 2 956 680 propose un système astucieux de réglettes de support des rails permettant à l'opérateur, lors du montage, de repérer le positionnement des rails, sans avoir à mesurer la distance entre les rails. Dans un mode de réalisation de ce document, plusieurs rangées de réglettes de support sont disposées avant la pose des rails et traverses qui supportent eux-mêmes les panneaux photovoltaïques. Il existe un besoin pour améliorer encore ce système de réglettes, notamment pour en réduire le nombre afin de diminuer les coûts de l'installation solaire photovoltaïque, tout en préservant les avantages offerts par un tel système.

### 3. Objectifs de l'invention

L'invention a donc notamment pour objectif de pallier tout ou partie de ces inconvénients de l'art antérieur.

Plus précisément, l'invention a pour objectif de fournir une installation solaire photovoltaïque sur une charpente de toiture existante ou en cours de construction, notamment toiture d'habitation, comprenant par exemple des ardoises ou des tuiles, la charpente comportant des chevrons et des liteaux.

L'invention a encore pour objectif de fournir une installation solaire photovoltaïque sur une charpente de toiture qui permette d'encaisser la dilatation de la structure aluminium.

L'invention a encore pour objectif de fournir une installation solaire photovoltaïque sur une charpente de toiture qui soit relativement facile et rapide à poser pour un opérateur.

L'invention a encore pour objectif de fournir une installation solaire photovoltaïque sur une charpente de toiture qui soit modulaire et puisse facilement être adaptée à la charpente au moment de la pose.

L'invention a encore pour objectif de proposer une installation solaire photovoltaïque qui permette d'éviter d'avoir à multiplier les mesures au moment de la pose.

### 4. Exposé de l'invention

L'invention répond à tout ou partie de ces objectifs grâce à une installation solaire photovoltaïque montée sur au moins une portion de charpente de toiture, notamment une toiture comprenant des tuiles ou des ardoises, comprenant :
- au moins un panneau photovoltaïque,
- une structure, notamment en aluminium, comprenant au moins deux rails s'étendant parallèlement à des chevrons de la charpente, selon un axe longitudinal, les rails étant configurés pour maintenir au moins partiellement ledit au moins un panneau photovoltaïque sur la charpente.

Selon l'invention, au moins l'un des rails comporte une ouverture configurée pour permettre le passage d'une vis de fixation du rail sur la charpente tout en ménageant un jeu autorisant un léger déplacement du rail relativement à la charpente, apte à absorber une dilatation de la structure.

Grâce à l'invention, on dispose d'une installation solaire photovoltaïque apte à absorber la dilatation et pourtant ne comportant pas de pièce supplémentaire pour remplir cette fonction, ce qui diminue à la fois le coût de revient de l'installation et son coût de montage.

Il est à noter que, dans la présente demande, l'expression « vis de fixation » est générique pour désigner un organe de solidarisation du rail sur la charpente, cet organe pouvant comprendre une cheville, un clou, une vis ou un autre moyen de fixation de ce type.

Selon un mode de réalisation préféré mais non exclusif, l'ouverture est oblongue selon l'axe longitudinal. Le rail est, dans ce cas, apte à se déplacer, en cas de dilatation, le long de l'axe longitudinal relativement à la charpente. L'ouverture peut, toujours dans ce cas, être sensiblement de la dimension de la vis de fixation perpendiculairement à l'axe longitudinal, c'est-à-dire sans ménager de possibilité de déplacement du rail selon cet axe perpendiculaire à l'axe longitudinal.

La structure de l'installation solaire photovoltaïque comprend avantageusement au moins une traverse montée sensiblement perpendiculairement à au moins l'un des rails en une zone d'intersection entre le rail et la ou les traverses. L'ouverture est par exemple formée dans ou à proximité de cette zone d'intersection.

Les rails peuvent comporter un tunnel central d'axe longitudinal, le tunnel central comportant une partie supérieure et une partie inférieure, la partie inférieure comportant l'ouverture et la partie supérieure comportant une deuxième ouverture formée sensiblement à l'aplomb de ladite ouverture et permettant le passage de la vis de fixation.

Dans un mode de réalisation, les rails comportent deux canaux latéraux d'axe longitudinal configurés pour permettre un écoulement d'eau, s'étendant par exemple de part et d'autre du tunnel central.

Une telle configuration des rails leur permet de jouer leur rôle de support du ou des panneaux photovoltaïques, étant maintenus sur la charpente de la toiture, tout en permettant l'écoulement d'eau, et absorbant la dilatation du rail. La présence, sur les rails, d'un tunnel central présentant l'ouverture et entouré de deux canaux latéraux permet de séparer l'espace de fixation du rail sur la charpente, localisé dans le tunnel central, de l'espace pour l'écoulement d'eau, dans les canaux, préservant ainsi la vis de fixation de tout risque d'infiltration par l'ouverture.

Selon un autre aspect de l'invention, l'installation solaire photovoltaïque peut comporter au moins une cale de compensation positionnée sous un rail et/ou une traverse, notamment sous un rail, configurée pour rattraper une déformation de la charpente, notamment pour une toiture existante.

Dans ce cas, la cale de compensation peut être configurée pour compenser différentes tailles de déformations de charpente.

Un seul type de cale de compensation peut être ainsi utilisé pour compenser différentes déformations de la charpente. Lors du montage de l'installation, l'opérateur dispose par exemple d'une ou plusieurs cales de compensation de ce type, qu'il peut adapter selon la déformation rencontrée, à un ou plusieurs endroits de l'installation.

Dans un mode de réalisation particulier, la cale de compensation comporte deux éléments de cale, notamment de section triangulaire, disposés l'un sur l'autre, aptes à coulisser l'un par rapport à l'autre de manière à faire varier une hauteur totale de la cale de compensation entre une hauteur minimale et une hauteur maximale.

La cale de compensation peut, dans ce dernier cas, comporter au moins un cran de blocage permettant de bloquer le coulissement relatif des deux éléments de cale dans une position correspondant à une hauteur de compensation donnée.

La cale de compensation peut par exemple être fixée à l'un des rails à l'aide de la vis de fixation. Dans ce cas, la vis de fixation permet de fixer, sur la charpente, le rail et également l'éventuelle cale de compensation, s'il existe une déformation de la charpente à compenser à cet endroit-là.

Selon un autre aspect de l'invention, l'installation solaire photovoltaïque peut en outre comprendre au moins une cornière de calepinage, fixée à une extrémité, notamment inférieure, d'au moins un rail, perpendiculairement à celui-ci. Cette cornière de calepinage peut être configurée pour être fixée sur la charpente, préalablement au rail. Le rail est positionné sur la cornière de calepinage, avant sa fixation. La cornière de calepinage facilite ainsi le positionnement du rail et donc le montage de l'installation solaire photovoltaïque.

Dans ce cas, la cornière de calepinage peut comporter par exemple au moins une languette de positionnement, agencée pour être positionnée dans le tunnel central du rail, la languette de positionnement étant notamment de largeur sensiblement égale à une largeur intérieure du tunnel central. Ainsi, lors du montage de l'installation solaire photovoltaïque, après positionnement de la cornière de calepinage, le positionnement du rail est aisé, en plaçant le tunnel autour de la languette de positionnement.

La cornière de calepinage peut par exemple être agencée pour être fixée à une autre cornière de calepinage, de manière à s'étendre l'une dans le prolongement de l'autre, chaque cornière de calepinage permettant de positionner un seul rail. Le nombre de cornières de calepinage est lié, dans ce cas, au nombre de rails de l'installation solaire photovoltaïque.

L'invention a encore pour objet, en combinaison avec ce qui précède, un ensemble d'éléments pour permettre le montage et la fixation d'une installation solaire photovoltaïque telle que définie plus haut, sur une portion de charpente d'une toiture, notamment en tuiles ou en ardoises. L'ensemble d'éléments comprend au moins un panneau photovoltaïque et une structure comprenant au moins deux rails, tels que définis plus haut, destinés à s'étendre parallèlement à des chevrons de la charpente, selon un axe longitudinal, les rails étant configurés pour pouvoir maintenir au moins partiellement le panneau photovoltaïque sur la charpente, au moins l'un des rails comportant une ouverture configurée pour permettre le passage d'une vis de fixation du rail sur la charpente tout en ménageant un jeu autorisant un léger déplacement du rail relativement à la charpente, apte à absorber une dilatation de la structure.

L'ensemble d'éléments peut comprendre en outre, les traverse(s), cale(s) de compensation et/ou cornière(s) de calepinage ou autres éléments tels que définis plus haut.

### 5. Liste des figures

D'autres caractéristiques et avantages de l'invention apparaîtront plus clairement à la lecture de la description suivante d'un mode de réalisation de l'invention, donné à titre d'exemple illustratif et non limitatif et du dessin annexé dans lequel :
- la figure 1 représente de manière schématique et en perspective une installation solaire photovoltaïque conforme à l'invention, intégrée dans une toiture;
- la figure 2 représente de manière schématique et en perspective l'installation solaire photovoltaïque de la figure 1 avant la pose des panneaux photovoltaïques ;
- la figure 3 est une vue de dessus en perspective schématique et partielle d'une zone d'intersection entre un rail et deux traverses de l'installation solaire photovoltaïque de la figure 2;
- la figure 4 représente sensiblement, de manière schématique et en perspective, la zone d'intersection de la figure 3 vue de dessous ;
- la figure 5 est une vue de côté, schématique et en perspective, d'une cale de compensation d'une installation solaire photovoltaïque conforme à l'invention ;
- les figures 6 et 7 illustrent schématiquement et en perspective la cale de compensation de la figure 5 disposée sous un rail, présentant respectivement une hauteur minimale et une hauteur maximale de compensation;
- la figure 8 est une vue schématique et partielle, en perspective d'une portion inférieure de l'installation solaire photovoltaïque représentée dépourvue de panneaux photovoltaïques, comportant une cornière de calepinage ;
- la figure 9 illustre de manière schématique, partielle et en perspective, isolément, la cornière de calepinage de la figure 8 ; et
- la figure 10 illustre de manière schématique partielle et en perspective la collaboration entre deux cornières de calepinage adjacentes et entre une cornière de calepinage et un rail.

### 6. Description détaillée d'un mode de réalisation de l'invention

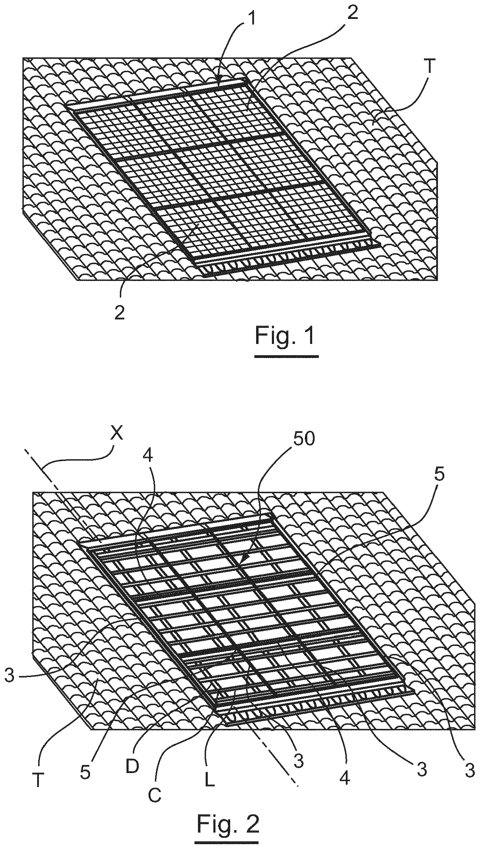

On a représenté sur la figure 1 une installation solaire photovoltaïque 1 montée sur au moins une portion de charpente C de toiture T. Dans l'exemple illustré, la toiture T comprend des tuiles mais elle peut comprendre des ardoises ou un autre type de matériau de couverture sans sortir du cadre de l'invention.

La charpente C, dont une partie est visible sur la figure 2, comporte notamment des chevrons D et des liteaux L, les chevrons D étant parallèles à un axe longitudinal X s'étendant selon la pente de la toiture. Les liteaux L sont perpendiculaires aux chevrons D.

Comme visible sur la figure 1, l'installation solaire photovoltaïque 1 illustrée comporte au moins un panneau photovoltaïque 2, au nombre de neuf dans l'exemple illustré.

Le nombre de panneaux photovoltaïques 2 n'est bien entendu pas limitatif, de même que la forme globale de l'installation solaire photovoltaïque 1 qui peut se présenter comme dans l'exemple illustré sous une forme sensiblement carrée mais peut présenter une autre forme globale, par exemple rectangulaire, en T, en H ou autre, sans sortir du cadre de l'invention. La forme de l'installation solaire photovoltaïque est par exemple liée à l'exposition au soleil et/ou à la forme de la toiture sur laquelle elle est montée.

L'installation solaire photovoltaïque 1, directement posée et fixée sur la charpente C, est entourée des tuiles de la toiture T. La liaison entre l'installation solaire photovoltaïque 1 et la toiture T est bien entendu étanche, de manière connue en soi.

Comme visible davantage sur la figure 2, l'installation solaire photovoltaïque 1 comporte une structure 50, dans cet exemple en aluminium, comprenant au moins deux rails 3, au nombre de quatre dans l'exemple illustré, deux rails 3 étant en bordure de l'installation solaire photovoltaïque 1 et deux rails 3 étant positionnés au sein de l'installation solaire photovoltaïque 1. Les rails 3 sont parallèles à l'axe longitudinal X. Ils s'étendent parallèlement aux chevrons D de la charpente C. Les rails 3 sont configurés pour maintenir au moins partiellement les panneaux photovoltaïques 2 sur la charpente C.

L'installation solaire photovoltaïque 1 illustrée sur les figures comporte également au moins une traverse 4 montée sensiblement perpendiculairement à au moins l'un des rails 3 en une zone d'intersection 5 entre les rails 3 et la ou les traverses 4. Les traverses 4 sont dans l'exemple illustré parallèles aux liteaux L de la charpente C. Les traverses 4 font également partie de la structure 50 en aluminium qui forme ainsi un maillage de rails 3 et de traverses 4 en aluminium. La structure 50 en aluminium est susceptible de se dilater, sous l'action d'une différence de température, en allongement ou en rétractation.

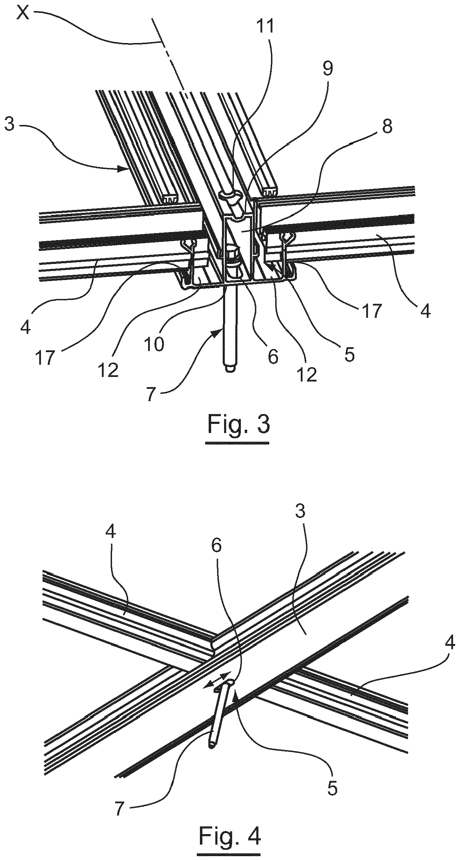

Dans l'exemple illustré, une zone d'intersection 5 peut être formée par l'intersection entre un rail 3 et, perpendiculairement, une ou deux traverses 4 s'étendant de part et d'autre du rail 3. Dans les zones de bordure entre la toiture T et l'installation solaire photovoltaïque 1, un rail 3 et une traverse 4 se croisent seulement d'un côté du rail 3. Dans les zones d'intersection intérieures, un rail est intersecté par deux traverses 4, l'une s'étendant jusqu'au rail d'un côté de celui-ci et l'autre s'étendant jusqu'au rail de l'autre côté de celui-ci. Ainsi, comme visible notamment sur les figures 3 et 4, le rail 3 s'étend de façon continue, tandis que les traverses 4 viennent se fixer de part et d'autre du rail 3, perpendiculairement à celui-ci, de façon discontinue.

Dans un autre mode de réalisation non illustré, les zones d'intersection intérieures peuvent comprendre un rail 3 et une seule traverse 4 s'étendant de part et d'autre du rail, ce qui crée un réel croisement entre le rail et la traverse.

Selon l'invention, et comme illustré sur les figures 3 et 4 notamment, au moins l'un des rails 3 comporte une ouverture 6 configurée pour permettre le passage d'une vis de fixation 7 d'un rail 3 sur la charpente C tout en ménageant un jeu autorisant un léger déplacement du rail 3 relativement à la charpente C, apte à absorber une dilatation de la structure 50 aluminium. Ce possible déplacement est illustré par la double flèche sur la figure 4.

Ainsi, l'invention permet d'avoir une installation solaire photovoltaïque qui encaisse la dilatation sans ajout de pièce supplémentaire.

Dans le mode de réalisation illustré, l'ouverture 6 est oblongue selon l'axe longitudinal X. Dans l'exemple illustré également, l'ouverture 6 est formée dans la zone d'intersection 5.

Le rail 3 comporte un tunnel central 8 visible sur la figure 3, de section transversale sensiblement rectangulaire dans cet exemple, comportant une partie supérieure 9 et une partie inférieure 10, formant respectivement les côtés supérieur et inférieur du tunnel central 8. La partie inférieure 10 comporte l'ouverture 6 et la partie supérieure 9 comporte une deuxième ouverture 11, circulaire dans l'exemple illustré, formée sensiblement à l'aplomb de l'ouverture 6 et permettant le passage de la vis de fixation 7.

Il est à noter que la forme de la section transversale du tunnel central 8 peut différer du mode de réalisation décrit, par exemple être ovale, circulaire ou autre sans sortir du cadre de l'invention.

Par ailleurs, les rails 3 comportent deux canaux latéraux 12 configurés pour permettre un écoulement d'eau. Contrairement au tunnel central 8 qui est essentiellement fermé hormis la ou les deuxièmes ouvertures 11, les canaux latéraux 12 sont ouverts pour permettre notamment l'écoulement d'eau et également la fixation des traverses 4, comme illustré sur la figure 3.

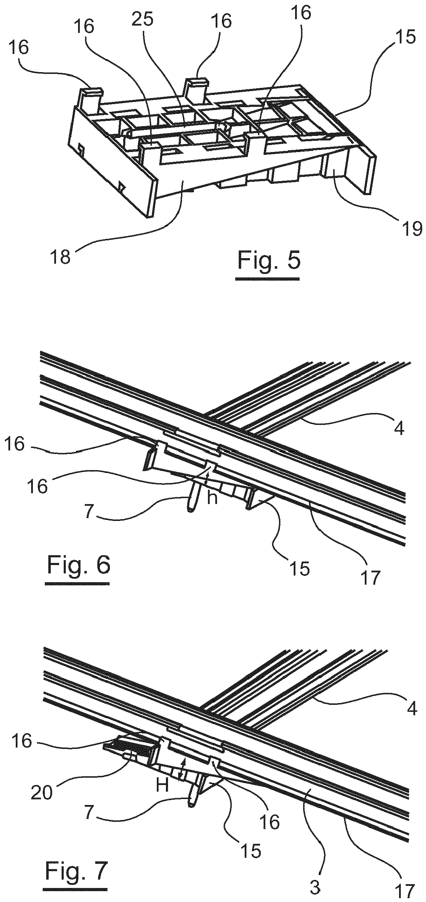

Sur la figure 5, on a illustré un autre élément composant l'installation solaire photovoltaïque 1, à savoir une cale de compensation 15 que l'opérateur peut positionner sous un rail 3 et/ou une traverse 4, en l'espèce sous un rail 3. La cale de compensation 15 est configurée pour rattraper une déformation de la charpente. Dans l'exemple illustré, la cale de compensation 15 peut être posée sous un rail et être solidarisée à celui-ci grâce à la présence de languettes de fixation 16, au nombre de quatre dans l'exemple illustré, pouvant s'encliqueter, comme illustré sur les figures 6 et 7, sur des nervures 17 accolées aux canaux latéraux 12 du rail 3, comme visible sur la figure 3. La cale de compensation 15 comporte, dans cet exemple, des éléments de cale 18 et 19, à savoir un élément supérieur 18 et un élément inférieur 19. Ces éléments de cale 18 et 19 sont, dans l'exemple illustré, de section triangulaire comme visible sur la figure 5 notamment et disposés l'un sur l'autre. Ils sont positionnés l'un par rapport à l'autre de manière à former, dans une position relative, en section transversale sensiblement un rectangle, chaque élément de cale présentant une section de triangle rectangle. Les éléments de cale 18 et 19 sont aptes à coulisser l'un par rapport à l'autre de manière à faire varier une hauteur totale de la cale de compensation 15 entre une hauteur minimale h de compensation illustrée sur la figure 6 et une hauteur maximale H de compensation illustrée sur la figure 7. La cale de compensation 15 comporte dans cet exemple des crans de blocage 20, dont l'un est visible sur la figure 7, permettant de bloquer le coulissement relatif des deux éléments de cale 18 et 19 dans une position correspondant à une hauteur de compensation donnée.

L'opérateur pourra ainsi choisir lors du montage de l'installation solaire photovoltaïque, la hauteur de compensation de la cale de compensation en fonction de la déformation de charpente rencontrée. Bien entendu, l'opérateur ne disposera pas de cale de compensation 15 s'il s'agit d'une charpente dépourvue de déformations, comme par exemple une charpente neuve.

Comme visible sur les figures 6 et 7, la cale de compensation 15 comporte une ouverture centrale 25 pour permettre le passage de la vis de fixation 7, de manière à fixer la cale de compensation 15 à l'un des rails 3 à l'aide de cette vis de fixation 7. Il est à noter que dans le cas où une cale de compensation 15 est nécessaire, celle-ci s'interpose entre la charpente et le rail 3.

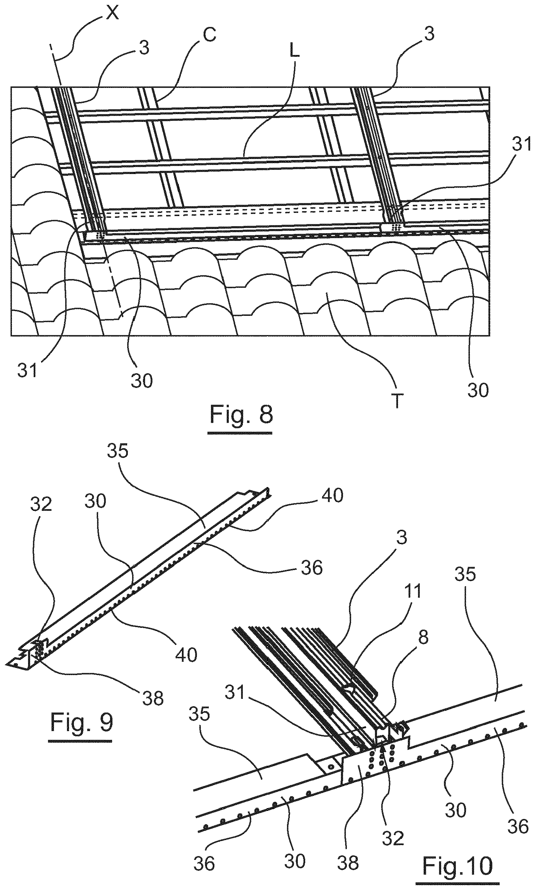

La figure 8 représente, de manière agrandie, une portion basse de l'installation solaire photovoltaïque dépourvue des panneaux photovoltaïques 2 comme sur la figure 2. Sur cet agrandissement, on distingue deux cornières de calepinage 30 disposées dans le prolongement l'une de l'autre, perpendiculairement à l'axe longitudinal X et au rail 3. Une cornière de calepinage 30 est associée à un rail 3, étant solidarisée à une extrémité inférieure 31 de ce rail 3.

Une cornière de calepinage 30, formée dans une tôle métallique découpée et pliée, est illustrée isolément sur la figure 9. Comme visible sur cette figure, la cornière de calepinage 30 comporte une base 35 et un bord 36 perpendiculaire à la base 35, permettant de retenir le cas échéant le rail 3 venant en appui contre celui-ci. Une languette de positionnement 32 s'étend parallèlement à la base 35, surélevée par rapport à celle-ci et s'étendant à partir du bord 36, notamment à partir d'une portion 38 d'extrémité de la cornière de calepinage 30 dans laquelle le bord 36 est surélevé.

Il est à noter que, dans cet exemple, la portion 38 d'extrémité du bord 36 présente une hauteur supérieure à celle du reste du bord 36, la languette de positionnement 32 s'étendant, par pliage de tôle, à partir du bord supérieur de la portion 38 d'extrémité.

La languette de positionnement 32 est agencée pour être positionnée dans le tunnel central 8 du rail 3 à une extrémité inférieure 31 de celui-ci. La languette de positionnement 32 est notamment de largeur sensiblement égale à une largeur intérieure du tunnel central 8.

Dans l'exemple illustré, plusieurs trous 40 sont formés dans la cornière de calepinage 30, certains de ces trous 40 n'ayant pas de fonction particulière, d'autres permettant la fixation notamment de deux cornières de calepinage 30 entre elles.

Lors du montage de l'installation solaire photovoltaïque 1, les cornières de calepinage 30 sont positionnées et fixées entre elles et sur la charpente, dans le prolongement l'une de l'autre. La présence des languettes de positionnement 32 permet à l'opérateur de positionner les rails 3 de manière aisée, sans avoir à utiliser d'outils de mesure puisqu'il suffit de positionner le tunnel central 8 ouvert à l'extrémité inférieure 31 du rail 3, dans la languette de positionnement 32 de la languette de calepinage 30.

Il est à noter qu'en partie inférieure de l'installation solaire photovoltaïque 1, dans le mode de réalisation illustré, il n'y a pas de traverse 4.

Dans toute la description, les expressions « comportant un » ou « comprenant un » doivent être comprises comme étant synonymes respectivement des expressions « comportant au moins un » et « comprenant au moins un », sauf si le contraire est spécifié.

## Revendications

1. Installation solaire photovoltaïque (1) montée sur au moins une portion de charpente (C) de toiture (T), notamment une toiture (T) comprenant des tuiles ou des ardoises, comprenant :
- au moins un panneau photovoltaïque (2),
- une structure (50), notamment en aluminium, comprenant au moins deux rails (3) s'étendant parallèlement à des chevrons (D) de la charpente (C), selon un axe longitudinal (X), les rails (3) étant configurés pour maintenir au moins partiellement ledit au moins un panneau photovoltaïque (2) sur ladite charpente (C),
**caractérisée en ce qu'**au moins l'un des rails (3) comporte une ouverture (6) configurée pour permettre le passage d'une vis de fixation (7) du rail (3) sur la charpente (C) tout en ménageant un jeu autorisant un léger déplacement du rail (3) relativement à la charpente (C), apte à absorber une dilatation de ladite structure (50).

2. Installation solaire photovoltaïque (1) selon la revendication 1, dans laquelle l'ouverture (6) est oblongue selon l'axe longitudinal (X).

3. Installation solaire photovoltaïque (1) selon l'une des revendications 1 et 2, ladite structure (50) comprenant au moins une traverse (4) montée sensiblement perpendiculairement à au moins l'un desdits rails (3) en une zone d'intersection (5) entre ledit rail (3) et la ou les traverses (4) et dans laquelle l'ouverture (6) est formée dans ou à proximité de ladite zone d'intersection (5).

4. Installation solaire photovoltaïque (1) selon l'une quelconque des revendications 1 à 3, dans laquelle lesdits rails (3) comportent un tunnel central (8) d'axe longitudinal (X), le tunnel central (8) comportant une partie supérieure (9) et une partie inférieure (10), ladite partie inférieure (10) comportant ladite ouverture (6) et ladite partie supérieure (9) comportant une deuxième ouverture (11) formée sensiblement à l'aplomb de ladite ouverture (6) et permettant le passage de la vis de fixation (7).

5. Installation solaire photovoltaïque selon l'une quelconque des revendications 1 à 3, dans laquelle lesdits rails (3) comportent deux canaux latéraux (12) d'axe longitudinal (X) configurés pour permettre un écoulement d'eau.

6. Installation solaire photovoltaïque (1) selon l'une quelconque des revendications précédentes, comprenant au moins une cale de compensation (15) positionnée sous un rail (3) et/ou une traverse (4), configurée pour rattraper une déformation de la charpente (C).

7. Installation solaire photovoltaïque selon la revendication précédente, dans laquelle la cale de compensation (15) est configurée pour compenser différentes tailles de déformations de charpente (C).

8. Installation solaire photovoltaïque (1) selon l'une des revendications 6 et 7, dans laquelle la cale de compensation (15) comporte deux éléments de cale (18 ; 19), notamment de section triangulaire, disposés l'un sur l'autre, aptes à coulisser l'un par rapport à l'autre de manière à faire varier une hauteur totale de la cale de compensation (15) entre une hauteur minimale et une hauteur maximale.

9. Installation solaire photovoltaïque (1) selon la revendication 8, dans laquelle la cale de compensation (15) comporte au moins un cran de blocage (20) permettant de bloquer le coulissement relatif des deux éléments de cale (18 ; 19) dans une position correspondant à une hauteur de compensation donnée.

10. Installation solaire photovoltaïque (1) selon l'une quelconque des revendications 6 à 9, dans laquelle la cale de compensation (15) est fixée à l'un des rails (3) à l'aide de ladite vis de fixation (7).

11. Installation solaire photovoltaïque (1) selon l'une quelconque des revendications précédentes, comprenant au moins une cornière de calepinage (30), fixée à une extrémité (31), notamment inférieure, d'au moins un rail (3), perpendiculairement à celui-ci.

12. Installation solaire photovoltaïque (1) selon la revendication précédente et la revendication 4, dans laquelle la cornière de calepinage (30) comporte au moins une languette de positionnement (32), agencée pour être positionnée dans le tunnel central (8) dudit au moins un rail (3), la languette de positionnement (32) étant notamment de largeur sensiblement égale à une largeur intérieure du tunnel central (8).

13. Installation solaire photovoltaïque (1) selon l'une des deux revendications immédiatement précédentes, dans laquelle la cornière de calepinage (30) est agencée pour être fixée à une autre cornière de calepinage (30), de manière à s'étendre l'une dans le prolongement de l'autre, chaque cornière de calepinage (30) permettant de positionner un seul rail (3).

14. Ensemble d'éléments pour permettre le montage et la fixation d'une installation solaire photovoltaïque (1) selon l'une quelconque des revendications 1 à 13, sur une portion de charpente (C) d'une toiture (T), notamment en tuiles ou en ardoises.
